# EUROPEAN PATENT APPLICATION

(11) **EP 4 366 201 A1**
(43) Date of publication of application: **08.05.2024**
(21) Application number: 22848105.7
(22) Date of filing: 17.06.2022
(51) Int. Cl.: H04L 1/00

(54) **DATA PROCESSING METHOD AND APPARATUS, AND ELECTRONIC DEVICE AND COMPUTER-READABLE STORAGE MEDIUM**

(30) Priority: 28.07.2021 CN 202110859608
(71) Applicant: ZTE Corporation, Shenzhen, Guangdong 518057 (CN)
(72) Inventor: GAO, Minggang, Shenzhen, Guangdong 518057 (CN); DING, Xuemei, Shenzhen, Guangdong 518057 (CN); SUN, Hongli, Shenzhen, Guangdong 518057 (CN); WEI, Mingye, Shenzhen, Guangdong 518057 (CN)
(74) Representative: Savi, Massimiliano
(86) International application number: PCT/CN2022/099525
(87) International publication number: WO 2023/005498

(57) **Abstract**

A data processing method and apparatus, and an electronic device and a computer-readable storage medium. The data processing method comprises: when a receiving end detects that received target data is punctured, acquiring feature information, which represents a decoding difficulty, of the target data (101); according to the feature information which represents the decoding difficulty, determining whether to decode the target data (102); and if it is determined that the target data is to be decoded, decoding the target data, and sending, to a sending end of the target data, information that indicates whether the decoding is successful (103).

## Description

### CROSS-REFERENCE TO RELATED APPLICATION

This application is filed on the basis of Chinese patent application No. 202110859608.X filed July 28, 2021, and claims priority to the Chinese patent application, the entire contents of which are incorporated herein by reference.

### TECHNICAL FIELD

The present disclosure relates to the field of 5th Generation (5G) mobile technologies, and more particularly, to a data processing method and apparatus, an electronic device, and a computer-readable storage medium.

### BACKGROUND

With the large-scale spread of 5G, the industrial application field of 5G is becoming wider and wider. In the future, more communication transmission will depend on 5G wireless technologies, and wired fiber deployment will be abandoned gradually, to improve the flexibility of communication deployment. Accordingly, Ultra Reliable Low Latency Communication (URLLC) for 5G industrial applications and Enhanced Mobile Broadband (eMBB) mainly for civil use have been developed. Although different fields have different requirements for wireless communication, the URLLC and eMBB technologies are not completely isolated from each other for networks and terminal devices, and usually networks and terminal devices all integrate both the two technologies. In other words, generally a terminal device can support both URLLC and eMBB, and there may be hybrid scheduling in network scheduling. Therefore, when an eMBB service and a URLLC service conflict, how to coordinate the services effectively is very important.

When high-priority data (e.g., URLLC) is to be sent, if low-priority data has been scheduled at this moment, the transmission of the low-priority data needs to be interrupted, and resources for transmitting the low-priority data are used to send the high-priority data. In a specific method, the network sends DCI2_1 to inform which symbols and which resource blocks are punched (i.e., which time-domain and frequency-domain resources are interrupted by the high-priority URLLC transmission). The punched eMBB data transmission is directly discarded, and it is assumed that the decoding of the eMBB data fails.

However, it is found that although the workload of decoding the eMBB data is reduced by the above technical scheme, the assumption that the decoding of the eMBB data fails may not be valid, resulting in a decrease in the decoding rate of the eMBB data and an increase in the quantity of retransmissions of the eMBB data.

### SUMMARY

A main objective of embodiments of the present disclosure is to provide a data processing method and apparatus, an electronic device, and a storage medium.

To achieve the above objective, an embodiment of the present disclosure provides a data processing method. The method includes: acquiring, in response to detecting that received target data is punctured, feature information representing a decoding difficulty of the target data; determining according to the feature information representing the decoding difficulty whether to decode the target data; and decoding the target data and sending information indicating whether the decoding is successful to a transmit end of the target data, in response to determining to decode the target data.

To achieve the above objective, an embodiment of the present disclosure provides a data processing apparatus. The apparatus includes: a feature information acquisition module, configured for acquiring, in response to detecting that received target data is punctured, feature information representing a decoding difficulty of the target data; a determining module, configured for determining according to the feature information representing the decoding difficulty whether to decode the target data; and a processing module, configured for decoding the target data and sending information indicating whether the decoding is successful to a transmit end of the target data, in response to determining to decode the target data.

To achieve the above objective, an embodiment of the present disclosure provides an electronic device. The device includes: at least one processor; and a memory communicably connected to the at least one processor, where the memory stores an instruction executable by the at least one processor which, when executed by the at least one processor, causes the at least one processor to implement the above data processing method.

To achieve the above objective, an embodiment of the present disclosure provides a computer-readable storage medium, storing a computer program which, when executed by a processor, causes the processor to implement the above data processing method.

### BRIEF DESCRIPTION OF DRAWINGS

One or more embodiments are illustrated by the diagrams in the corresponding drawings and these exemplary descriptions are not intended to constitute a limitation to the embodiments. Same or like elements are denoted by the same reference numerals in the drawings. The drawings are not drawn to scale unless otherwise particularly stated.
FIG. 1 is a flowchart of a data processing method according to an embodiment of the present disclosure;
FIG. 2 is a schematic diagram one of puncturing according to an embodiment of the present disclosure;
FIG. 3 is a schematic diagram two of puncturing according to an embodiment of the present disclosure;
FIG. 4 is a schematic diagram three of puncturing according to an embodiment of the present disclosure;
FIG. 5 is a schematic diagram four of puncturing according to an embodiment of the present disclosure;
FIG. 6 is a flowchart of a data processing method according to another embodiment of the present disclosure;
FIG. 7 is a schematic diagram of a data processing apparatus according to an embodiment of the present disclosure; and
FIG. 8 is a schematic structural diagram of an electronic device according to an embodiment of the present disclosure.

### DETAILED DESCRIPTION

Objectives, technical schemes and advantages of the embodiments of the present disclosure will be clear from a detailed description of the embodiments of the present disclosure in conjunction with the drawings. However, it may be understood by those having ordinary skills in the art that although various embodiments of the present disclosure provide many technical details to make readers better understand the present disclosure, the technical schemes claimed in the present disclosure can be realized even without these technical details and various variations and modifications made based on the following embodiments. The following embodiments are divided for convenience of description and are not intended to constitute any limitation on the specific implementations of the present disclosure. The embodiments may be combined or used as references for each other where there are no contradictions.

An embodiment of the present disclosure relates to a data processing method, which is applied to a receive end. The receive end may be, but not limited to, a terminal device. In this embodiment, when detecting that target data is punched, the receive end acquires feature information representing a decoding difficulty of the target data, determines according to the feature information whether to decode the target data, and if determining to decode the target data, send information representing a decoding result to a transmit end. A decoding decision regarding the target data is acquired, and the decoding result is sent to the transmit end, such that during hybrid transmission of high-priority data and low-priority target data, the target data does not need to be discarded directly. Therefore, the performance of the target data is improved. In addition, the transmit end can be informed in time, so that the transmit end can perform a corresponding operation.

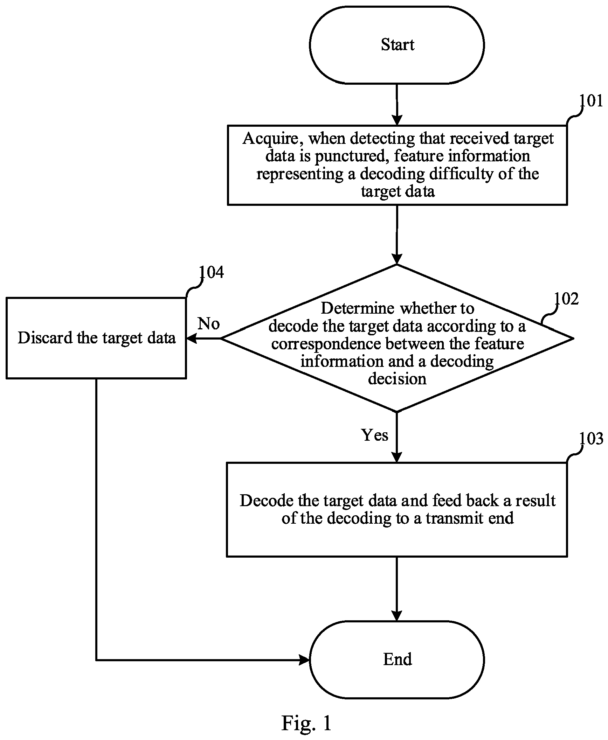

Implementation details of the data processing method of this embodiment will be described below and the following contents are provided only for convenience of understanding and are not necessary for implementing the present scheme. An application scenario of this embodiment may include, but not limited to, a terminal device technology. A detailed process of the method is shown in FIG. 1, which may include the following steps 101 to 104.

At step 101, the receive end acquires, when detecting that target data is punctured, feature information representing a decoding difficulty of the target data.

For example, if a transmit end sends high-priority data and finds that low-priority data is being sent, i.e., the target data is being sent, the transmit end punches the target data to preferentially send the high-priority data. After detecting that the target data is punched, the transmit end simultaneously sends the feature information representing the decoding difficulty of the target data to the receive end, to inform the receive end of time-domain and frequency-domain resources of the punched target data. In an example, the feature information representing the decoding difficulty includes at least one of a proportion of the target data being punched, a modulation and coding scheme (MCS) of the target data, a received signal strength of the target data, or a received signal-to-noise ratio of the target data.

In another example, the feature information representing the decoding difficulty includes the proportion of the target data being punched, the MCS of the target data, and the received signal strength of the target data.

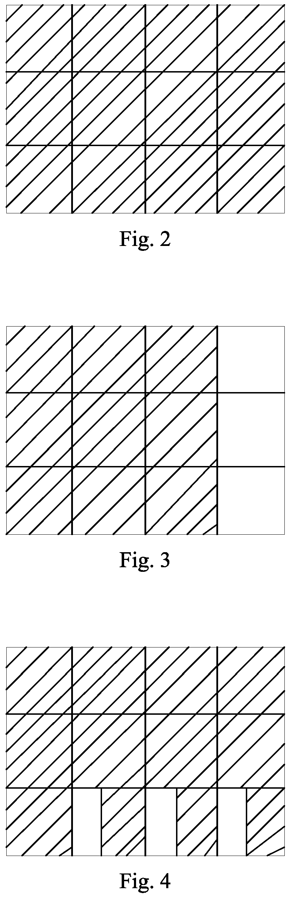

In this embodiment, the punching of the target data is an important factor that affects the decoding difficulty. A larger amount of data punched indicates a higher decoding difficulty. In an example, FIG. 2, FIG. 3, FIG. 4, and FIG. 5 represent several typical data transmission scenarios, where parts filled with lines in the drawings indicate that the parts have been occupied by the target data, and parts not filled with lines, i.e., white parts indicate that this part of target data has been punched.

FIG. 2 shows a transmission scenario in which the target data is not punched. In this transmission scenario, the target data is not punched, so the target data is likely to be decoded successfully.

FIG. 3 shows a transmission scenario in which the target data is punched. In this transmission scenario, many parts of the target data are punched, so the difficulty in decoding the target data is high.

FIG. 4 shows another transmission scenario in which the target data is punched. In this transmission scenario, a relatively small number of parts of the target data are punched, so the difficulty in decoding the target data is relatively low.

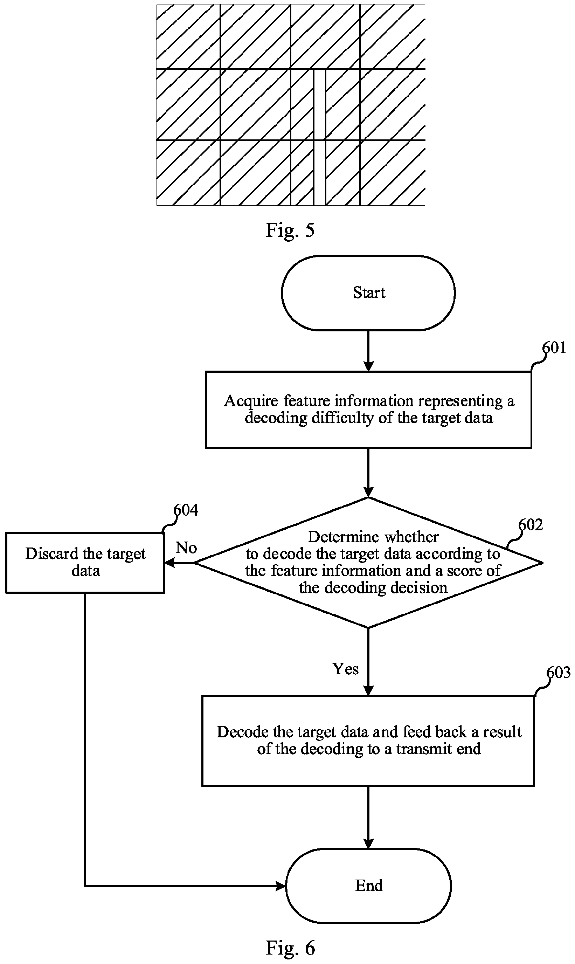

FIG. 5 shows another transmission scenario in which the target data is punched. In this transmission scenario, a very small number of parts of the target data are punched, so the difficulty in decoding the target data is very low.

In an implementation, before punching the target data, the transmit end of the target data generates resource occupation information of the punched target data, which is carried in downlink control information DCI2_1, and sends the downlink control information DCI2_1 carrying the resource occupation information of the punched target data to the receive end of the target data.

At step 102, the receive end determines whether to decode the target data according to a correspondence between the feature information and a decoding decision. If the decoding decision is yes, step 103 is performed. If the decoding decision is no, step 104 is performed.

For example, the receive end determines whether to decode the target data according to a preset correspondence between the decoding decision and the feature information representing the decoding difficulty of the target data acquired in step 101.

In an example, the preset correspondence is a correspondence between the decoding decision and at least one determining factor selected from the proportion of the target data being punched, the MCS of the target data, the received signal strength of the target data, and the received signal-to-noise ratio of the target data. The proportion of the target data being punched is a determining factor. The receive end may determine whether to decode the target data according to the preset correspondence.

In another example, the preset correspondence is a correspondence between the decoding decision and three determining factors including the proportion of the target data being punched, the MCS of the target data, and the signal strength of the target data. The receive end may determine whether to decode the target data according to the preset correspondence. The three determining factors are an example of a combination of determining factors for determining whether to decode the target data.

Table 1 is a table of correspondence between feature information and decoding decisions.

**Table 1**

| MCS of target data | Proportion of target data being punched | Current signal strength | Decoding decision |
|---|---|---|---|
| ≥0 and <5 | >0% and <20% | >-75 dBM | Yes |
| ≥0 and <5 | >0% and <20% | >-95 dBM and <-75 dBM | Yes |
| ≥0 and <5 | >0% and <20% | >-115 dBM and <-95 dBM | No |
| ≥0 and <5 | >20% | >-115 dBM and <-95 dBM | No |
| ≥5 and <15 | >0% and <20% | >-75 dBM | Yes |
| ≥5 and <15 | >0% and <15% | >-95 dBM and <-75 dBM | Yes |
| ≥5 and <15 | >0% and <15% | >-115 dBM and <-95 dBM | No |
| ≥5 and <15 | >0% and <15% | >-115 dBM and <-95 dBM | No |
| ≥5 and <15 | >15% | >-115 dBM and <-95 dBM | No |
| >15 | >0% and <10% | >-75 dBM | Yes |
| >15 | >0% and <10% | >-95 dBM and <-75 dBM | Yes |
| >15 | >0% and <10% | >-115 dBM and <-95 dBM | No |
| >15 | >10% | >-115 dBM and <-95 dBM | No |

In an example, it is assumed that the MCS of the target data is equal to 10, the proportion of the target data being punched is 8%, and the current signal quality is -78 dBM, i.e., the above determining factors are consistent with the condition in line 6 of Table 1: the MCS of the target data is greater than or equal to 5 and less than 15, the proportion of the target data being punched is greater than 0% and less than 15%, and the current signal strength is greater than -95 dBM and less than -75 dBM. In this case, the decoding decision corresponding to the determining factors is decoding, and step 103 is performed.

In another example, it is assumed that the MCS of the target data is equal to 20, the proportion of the target data being punched is 8%, and the current signal quality is -98 dBM, i.e., the above determining factors are consistent with the condition in line 12 of Table 1: the MCS of the target data is greater than 15, the proportion of the target data being punched is greater than 0% and less than 10%, and the current signal strength is greater than -115 dBM and less than -95 dBM, the decoding decision corresponding to the determining factors is not decoding, and step 104 is performed.

The MCS of the target data may be acquired from downlink control information (DCI), where the DCI is sent by the transmit end to the receive end when starting to transmit the target data, and the DCI carries the MCS of the target data.

The proportion of the target data being punched may be calculated based on the following formula: quantity of resource elements (REs) occupied by the punched portion of the target data/total quantity of REs occupied by the target data * 100%. In an example, a total quantity of time-frequency REs occupied by the target data is acquired from received DCI2_1 of the target data. The DCI2_1 is sent by the transmit end to the receive end in the form of a terminal device signal when the target data is punched, and DCI2_1 carries the total quantity of time-frequency REs occupied by the target data.

The current signal strength is acquired from a conventional signal measurement.

The receive end may acquire a decoding decision corresponding to the determining factor according to the correspondence between the determining factors and the decoding decisions. The decoding decision may be decoding or not decoding. When the decoding decision is decoding the target data, step 103 is performed.

At step 103, the receive end attempts to decode the target data and feeds back information representing a decoding result to the transmit end.

In an example, if the decoding of the target data by the receive end is successful, the receive end feeds back a Hybrid Automatic Repeat request (HARQ) Acknowledgment (ACK) to the transmit end, where the HARQ ACK is information indicating that the decoding is successful. By acquiring the decoding decision regarding the target data and feeding back the information indicating that the decoding is successful to the transmit end after successfully decoding the target data, not only the success rate of data decoding is improved, but also the transmit end can be informed in time that the target data has been decoded successfully and does not need to be retransmitted, thereby reducing the quantity of retransmissions.

In another example, if the decoding of the target data by the receive end fails, the receive end feeds back a HARQ Negative ACK (NACK) to the transmit end. The HARQ NACK is information indicating that the decoding fails, and is used to trigger the transmit end to perform adaptive retransmission with incremental redundancy. In other words, after the information indicating that the decoding fails is fed back to the transmit end, the transmit end sends check information obtained based on an adaptive retransmission algorithm to the receive end. The receive end attempts to decode the target data again according to the check information, and sends information indicating whether the re-decoding is successful to the transmit end of the target data. If the target data transmitted for the first time is not successfully decoded, more redundant bits may be retransmitted to reduce the channel coding rate, thereby increasing the decoding success rate. If the target data still cannot be decoded normally with the retransmitted redundant bits, another retransmission is performed. As the quantity of retransmission increases, redundant bits accumulate continuously, and the channel coding rate decreases continuously, such that a better decoding effect can be obtained.

In this embodiment, if the decoding decision in step 102 is not decoding the target data, step 104 is performed. At step 104, the target data is discarded, and no HARQ information is fed back to the transmit end.

For example, when determining according to the correspondence between the determining factor and the decoding decision in step 102 that the target data cannot be re-decoded due to an excessively high decoding difficulty of the target data or that there is no possibility of successful decoding even if the receive end determines to decode the target data, the receive end discards the target data and does not feed back any information.

In related technologies, hybrid transmission of high-priority data and low-priority data is often performed. After the low-priority data is punched, i.e., after the target data is punched, the receive end assumes that the decoding of the target data fails, and directly discards the target data. However, for data transmission in a physical layer, the target data is data obtained through encoding using a channel coding algorithm, and has high redundancy. In addition, the channel coding has strong fault tolerance and error correction. If a small part of resources is punched, it is equivalent to that a part of data is lost due to a short-term interference, in which case the remaining data can still be decoded successfully. Therefore, such an assumption is not valid, resulting in a sharp degrade in the performance of the target data and a great reduction in the decoding success rate of the data. In the embodiments of the present disclosure, a decoding decision regarding target data is acquired according to a decoding difficulty of the target data. If the decoding decision is decoding and the decoding is successful, the decoding success rate of the data can be effectively improved. Even if the decoding fails, a result indicating that the decoding fails is fed back to the transmit end, such that the transmit end sends check information obtained based on an adaptive retransmission algorithm to the receive end. The receive end re-decodes the target data. Because the channel coding rate is reduced during re-decoding, the possibility of successful decoding is increased, thereby reducing the data resource waste caused by direct discarding of the data and reducing the quantity of retransmissions triggered.

Another embodiment of the present disclosure relates to a data processing method. Implementation details of the data processing method of this embodiment will be described below and the following contents are provided only for convenience of understanding and are not necessary for implementing the present scheme. A detailed process of the method is shown in FIG. 6, which may include the following steps 601 to 604.

At step 601, the receive end acquires, when detecting that target data is punctured, feature information representing a decoding difficulty of the target data.

Step 601 is substantially the same as step 101, so the details will not be repeated herein.

At step 602, the receive end determines whether to decode the target data according to the feature information and a score of the decoding decision.

For example, the receive end respectively assigns weights to different determining factors in the acquired feature information representing the decoding difficulty of the target data, calculates a final score, and determines whether to decode the target data according to the score.

In an example, the receive end may respectively assign weights to three determining factors including the proportion of the target data being punched, the MCS of the target data, and the signal strength of the target data. For example, the receive end assigns a weight of 2 to the proportion of the target data being punched, a weight of 1.5 to the MCS of the target data, and a weight of 1 to the signal strength of the target data. Finally, the receive end performs weighted calculation according to the acquired determining factor information and the assigned weights to obtain a score, and determines whether to decode the target data according to the score.

In another example, the receive end respectively assigns weights to three determining factors including the proportion of the target data being punched, the MCS of the target data, and the signal strength of the target data, performs weighted averaging according to the acquired determining factor information and the assigned weights to obtain an average value, and determines whether to decode the target data according to the average value.

In this embodiment, if the decoding decision acquired based on the calculated score is to decode the target data, step 603 is performed. If the decoding decision acquired based on the calculated score is not to decode the target data, step 604 is performed.

At step 603, the receive end determines to decode the target data, determines whether the decoding is successful, and feeds back information representing a decoding result to the transmit end.

At step 604, the receive end determines not to decode the target data, and directly discards the target data.

Steps 603 to 604 are substantially the same as steps 103 to 104, so the details will not be repeated herein.

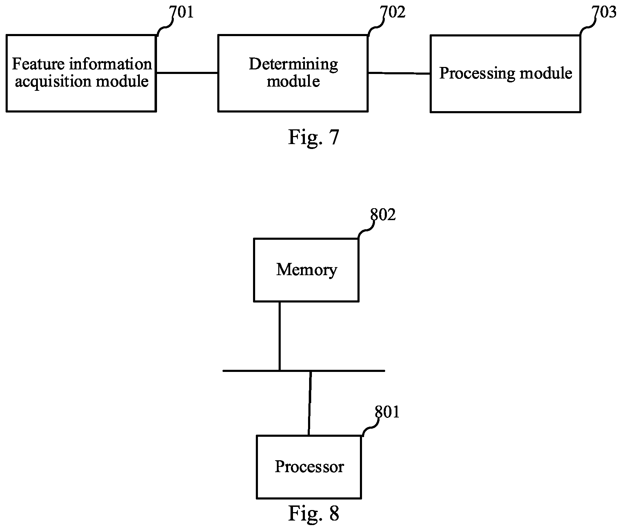

An embodiment of the present disclosure relates to a data processing apparatus. Details of the data processing apparatus of this embodiment will be described below and the following contents are provided only for convenience of understanding and are not necessary for implementing this embodiment. FIG. 7 is a schematic diagram of the data processing apparatus of this embodiment, which includes a feature information acquisition module 701, a determining module 702, and a processing module 703.

The feature information acquisition module 701 is configured for acquiring, when detecting that received target data is punctured, feature information representing a decoding difficulty of the target data. In an example, resource occupation information of the punched target data is generated by the transmit end of the target data before punching the target data, and sent to a receive end of the target data.

The determining module 702 is configured for determining according to the feature information representing the decoding difficulty whether to decode the target data. In an example, the feature information representing the decoding difficulty includes at least one of a proportion of the target data being punched, an MCS of the target data, a received signal strength of the target data, or a received signal-to-noise ratio of the target data. In another example, the feature information representing the decoding difficulty includes the proportion of the target data being punched, the MCS of the target data, and the received signal strength of the target data.

The processing module 703 is configured for decoding the target data and sending information indicating whether the decoding is successful to a transmit end of the target data, when it is determined to decode the target data. In an example, if the decoding of the target data by the receive end is successful, the receive end feeds back a HARQ ACK to the transmit end, where the HARQ ACK is information indicating that the decoding is successful. In another example, if the decoding of the target data by the receive end fails, the receive end feeds back a HARQ NACK to the transmit end. The HARQ NACK is information indicating that the decoding fails.

It can be seen that this embodiment is an apparatus embodiment corresponding to the foregoing method embodiments, and this embodiment may be implemented in combination with the foregoing method embodiments. The related technical details and technical effects mentioned in the foregoing method embodiments are still valid in this embodiment, and the details will not be repeated herein in order to reduce repetition. Correspondingly, the related technical details mentioned in this embodiment can also be applied to the above embodiments.

It is to be noted that each module involved in this embodiment is a logic module. In practical applications, a logic unit may be a physical unit or a part of a physical unit, or may be implemented by a combination of a plurality of physical units. In addition, in order to highlight the innovative part of the present disclosure, units that are not closely related to the technical problem to be solved in the present disclosure are not introduced in this embodiment, but this does not mean that there are no other units in this embodiment.

Another embodiment of the present disclosure relates to an electronic device, which, as shown in FIG. 8, includes: at least one processor 801; and a memory 802 communicably connected to the at least one processor 801. The memory 802 stores an instruction executable by the at least one processor 801 which, when executed by the at least one processor 801, causes the at least one processor 801 to implement the data processing method according to the foregoing method embodiments.

The memory and the processor are connected by a bus. The bus may include any number of interconnected buses and bridges. The bus connects various circuits of one or more processors and the memory together. The bus may also connect together a peripheral device, a voltage regulator, a power management circuit, and other circuits, which are well known in the art and therefore will not be detailed herein. A bus interface provides an interface between the bus and a transceiver. The transceiver may be one element or a plurality of elements, for example, a plurality of receivers and transmitters, and provides a unit for communicating with various other apparatus over a transmission medium. Data processed by the processor is transmitted over a wireless medium through an antenna. The antenna further receives data and transmits the data to the processor.

The processor is responsible for managing the bus and general processing and may also provide various functions including timing, peripheral interfaces, voltage regulation, power management and other control functions. The memory may be configured to store data used by the processor in performing operations.

Another embodiment of the present disclosure relates to a computer-readable storage medium, storing a computer program which, when executed by a processor, causes the processor to implement the foregoing method embodiments.

It may be understood by those having ordinary skills in the art that all or some of the steps of the methods in the above embodiments may be performed by a program instructing related hardware. The program is stored in a storage medium, and includes several instructions to cause a device (which may be a single chip microcomputer, a chip, etc.) or a processor to perform all or some of the steps of the methods described in the embodiments of the present disclosure. The foregoing storage medium includes: any medium that can store program code, such as a Universal Serial Bus (USB) flash drive, a removable hard disk, a Read-Only Memory (ROM), a Random Access Memory (RAM), a magnetic disk, or an optical disk.

In the embodiments of the present disclosure, after it is detected that target data is punched, feature information representing a decoding difficulty of the target data is acquired first to determine whether to decode the target data. The decoding difficulty of the target data is determined according to the feature information of the target data, and then whether to decode the target data is determined according to the decoding difficulty. The receive end does not directly assume that the decoding of the target data fails and discard the target data. This prevents data that can be successfully decoded from being discarded by mistake to cause a resource waste. In addition, the receive end does not directly determine that the decoding of the data fails, thereby improving the decoding success rate of the data and reducing the quantity of retransmissions triggered by the decoding failure. In addition, if determining to decode the target data, the receive end feeds back the information representing the decoding result to the transmit end after decoding the target data, such that the transmit end can perform a corresponding operation.

It may be understood by those having ordinary skills in the art that the foregoing embodiments are some embodiments for practicing the present disclosure and that in practical applications, various changes in form and details may be made without departing from the scope of the present disclosure.

## Claims

1. A data processing method, comprising:
acquiring, in response to detecting that received target data is punctured, feature information representing a decoding difficulty of the target data;
determining according to the feature information representing the decoding difficulty whether to decode the target data; and
decoding the target data and sending information indicating whether the decoding is successful to a transmit end of the target data, in response to determining to decode the target data.

2. The data processing method of claim 1, wherein the feature information representing the decoding difficulty comprises at least one of a proportion of the target data being punched, a modulation and coding scheme (MCS) of the target data, a received signal strength of the target data, or a received signal-to-noise ratio of the target data.

3. The data processing method of claim 2, wherein the feature information representing the decoding difficulty comprises the proportion of the target data being punched, the MCS of the target data, and the signal strength of the target data.

4. The data processing method of claim 2, wherein the feature information representing the decoding difficulty comprises the proportion of the target data being punched, and acquiring the proportion of the target data being punched comprises:
acquiring a total quantity of time-frequency resource elements (REs) occupied by the target data from received physical resource occupation information of the target data;
acquiring a quantity of REs occupied by a punched portion of the target data from received resource occupation information of the punched portion of the target data; and
calculating the proportion of the target data being punched according to the quantity of REs occupied by the punched portion of the target data and the total quantity of REs occupied by the target data.

5. The data processing method of any of claims 1 to 4, wherein determining according to the feature information representing the decoding difficulty whether to decode the target data comprises:
acquiring a decoding decision corresponding to the feature information representing the decoding difficulty of the target data according to a preset correspondence between the feature information representing the decoding difficulty and the decoding decision, wherein the decoding decision is decoding or not decoding; and
determining to decode the target data in response to the decoding decision being decoding, or determining not to decode the target data in response to the decoding decision being not decoding.

6. The data processing method of claim 1, wherein decoding the target data and sending information indicating whether the decoding is successful to a transmit end of the target data comprises: decoding the target data, and in response to the decoding being unsuccessful, sending information indicating that the decoding is unsuccessful to the transmit end of the target data; and
after decoding the target data, and in response to the decoding being unsuccessful, sending information indicating that the decoding is unsuccessful to the transmit end of the target data, the method further comprises:
receiving, from the transmit end of the target data, check information obtained based on an adaptive retransmission algorithm, wherein the check information is sent by the transmit end of the target data after receiving the information indicating that the decoding is unsuccessful; and
re-decoding the target data according to the check information and sending information indicating whether the re-decoding is successful to the transmit end of the target data.

7. The data processing method of claim 1, wherein detecting that received target data is punctured comprises: receiving resource occupation information of the punched portion of the target data in a process of receiving the target data,
wherein the resource occupation information of the punched portion of the target data is generated by the transmit end of the target data before punching the target data, and sent to a receive end of the target data.

8. The data processing method of claim 1, wherein after determining according to the feature information representing the decoding difficulty whether to decode the target data, the method further comprises:
discarding the target data in response to determining not to decode the target data.

9. A data processing apparatus, comprising:
a feature information acquisition module, configured for acquiring, in response to detecting that received target data is punctured, feature information representing a decoding difficulty of the target data;
a determining module, configured for determining according to the feature information representing the decoding difficulty whether to decode the target data; and
a processing module, configured for decoding the target data and sending information indicating whether the decoding is successful to a transmit end of the target data, in response to determining to decode the target data.

10. An electronic device, comprising:
at least one processor; and
a memory communicably connected to the at least one processor, wherein:
the memory stores an instruction executable by the at least one processor which, when executed by the at least one processor, causes the at least one processor to carry out the data processing method of any of claims 1 to 8.

11. A computer-readable storage medium, storing a computer program which, when executed by a processor, causes the processor to carry out the data processing method of any of claims 1 to 8.
